(19) Europäisches Patentamt
European Patent Office
Office européen des brevets

(11) Numéro de publication : **0 033 172**
**B1**

(12) **FASCICULE DE BREVET EUROPÉEN**

(45) Date de publication du fascicule du brevet :
24.04.85

(21) Numéro de dépôt : 81200039.6

(22) Date de dépôt : 14.01.81

(51) Int. Cl.⁴ : **H 04 N   5/12**

(54) **Circuit de correction des écarts de phase entre les signaux de commande de balayage et les signaux de synchronisation dans un récepteur de télévision.**

(30) Priorité : 25.01.80 FR 8001643

(43) Date de publication de la demande :
05.08.81 Bulletin 81/31

(45) Mention de la délivrance du brevet :
24.04.85 Bulletin 85/17

(84) Etats contractants désignés :
**AT DE FR GB IT NL SE**

(56) Documents cités :
**DE-A- 2 726 037**
**US-A- 4 025 951**
**IEEE TRANSACTIONS ON BROADCAST AND TELEVI-SION RECEIVERS, vol. BTR-19, no. 3, août 1973, pages 181-186 New York, U.S.A. H. YAMADA et al.: "A high stable television synchronizing system with a ceramic resonator"**

(73) Titulaire : **Laboratoires d'Electronique et de Physique Appliquée L.E.P.**
**3, Avenue Descartes**
**F-94450 Limeil-Brévannes (FR)**
**FR**
**N.V. Philips' Gloeilampenfabrieken**
**Groenewoudseweg 1**
**NL-5621 BA Eindhoven (NL)**
**DE GB IT NL SE AT**

(72) Inventeur : **Decraemer, Alain**
**Société Civile S.P.I.D. 209, rue de l'Université**
**F-75007 Paris (FR)**
Inventeur : **Pernot, Jean-Michel**
**Société Civile S.P.I.D. 209, rue de l'Université**
**F-75007 Paris (FR)**

(74) Mandataire : **Landousy, Christian et al**
**Société Civile S.P.I.D. 209, Rue de l'Université**
**F-75007 Paris (FR)**

## Description

La présente invention concerne un circuit de correction des écarts de phase entre les signaux de commande de balayage et les signaux de synchronisation dans un récepteur de télévision.

Malgré la qualité atteinte par les récepteurs actuels, leur complexité et la constatation manifeste que leur réalisation résulte de compromis entre la qualité des images produites, les possibilités techniques de fabrication des principaux composants et surtout le prix de revient, laissent en effet entendre qu'une vaste gamme de perfectionnements ou de simplifications est sans doute possible. Par ailleurs, la difficulté qu'implique souvent le traitement d'informations analogiques et la sensibilité de celles-ci à toutes sortes d'erreurs, de dérives ou de distorsions, incitent à l'utilisation de ces informations de préférence sous forme numérique, grâce à l'emploi de convertisseurs analogiques-numériques. De tels composants sont cependant, dans l'état présent de leur développement, soit trop lents pour l'application ici envisagée, soit d'une consommation relativement élevée et d'une complexité qui les rend coûteux.

La demande de brevet allemand publiée le 22 décembre 1977 avant examen sous le n° 2 726 037 décrit sur sa figure 1 un circuit de synchronisation verticale dans lequel il est prévu d'effectuer une correction des écarts de phase entre les signaux de commande de balayage vertical et les signaux de synchronisation contenus dans le signal vidéo composite reçu par le récepteur de télévision. Comme indiqué de la page 17, ligne 8, à la page 24, ligne 12, de ce document, ce circuit comprend essentiellement, pour ladite correction, un oscillateur 16, un diviseur (le compteur 36), des moyens de détection de phase, comprenant notamment les circuits 32, 51 et 52, et des moyens de détection d'état de synchronisation ou de désynchronisation, comprenant notamment le détecteur 45 qui compare les signaux issus des circuits 33 et 43. Cependant, l'analyse plus détaillée de l'ensemble de ces circuits montre en particulier qu'à l'état de désynchronisation, le dispositif travaille en synchronisation directe, l'étage de sortie étant alors directement commandé par les impulsions reçues, sans réglage de la phase.

Le but de l'invention est de proposer un circuit de correction d'écarts de phase applicable aux signaux de synchronisation horizontale et s'affranchissant de la solution de synchronisation directe mentionnée ci-dessus.

L'invention concerne à cet effet un circuit de correction des écarts de phase entre les signaux de commande de balayage et les signaux de synchronisation dans un récepteur de télévision, comprenant un oscillateur de référence, un diviseur de fréquence en sortie de l'oscillateur, un comparateur de phase destiné à fournir un signal exprimant la valeur et le signe de l'écart de phase entre les signaux de synchronisation et les signaux de sortie du diviseur de fréquence, un détecteur de l'état de synchronisation ou de désynchronisation du récepteur, et un générateur de signal de correction pour corriger le diviseur de fréquence à l'état de désynchronisation, ledit circuit étant caractérisé en ce qu'il est prévu pour la synchronisation des lignes et en ce que, à cet effet, le diviseur de fréquence comprend un décodeur destiné à délivrer un signal si le générateur de signal de correction ne fournit pas de correction, la séquence des signaux de sortie du décodeur ainsi obtenus constituant les signaux de commande de balayage de lignes, et en ce que le détecteur d'état est un dispositif à seuil destiné à constater l'état de synchronisation lorsque l'écart de phase entre les signaux de synchronisation de lignes et les signaux de sortie du diviseur de fréquence est inférieur à une valeur fixée d'avance ou l'état de désynchronisation lorsque ledit écart est au moins égal à cette valeur.

Dans le circuit ainsi proposé, la structure du diviseur de fréquence et celle du détecteur d'état permettent, de façon originale, de fonctionner systématiquement en synchronisation indirecte. Cela entraîne que l'étage de sortie, dans le cas de la présente invention, reçoit toujours des signaux engendrés localement et donc toujours présents (même si les signaux reçus sont momentanément absents) et en outre non entachés de bruit ou de perturbations.

D'autres particularités du circuit conforme à l'invention seront mieux comprises en se référant à la description qui va suivre ainsi qu'aux dessins annexés qui montrent, à titre d'exemples non limitatifs, un mode particulier de réalisation de l'invention et dans lesquels :

la figure 1 est un schéma synoptique du circuit de correction selon l'invention ;

la figure 2 montre le circuit logique du comparateur de phase de l'étage de comparaison de phase ;

la figure 3 est une représentation des différents signaux observés aux points principaux du circuit logique de la figure 2 ;

les figures 4 et 5 montrent respectivement le détecteur d'état de l'étage de commande de synchronisation et le générateur de signal de correction de ce même étage ;

la figure 6 montre la courbe écart de phase $\phi = f$ (nombre n de lignes) au cours d'une recherche de synchronisation ;

la figure 7 montre un exemple d'étage de stabilisation des signaux utiles obtenus et la figure 8 différents signaux observés aux points principaux de cet étage ; et

la figure 9 montre une variante d'une partie de la figure 7.

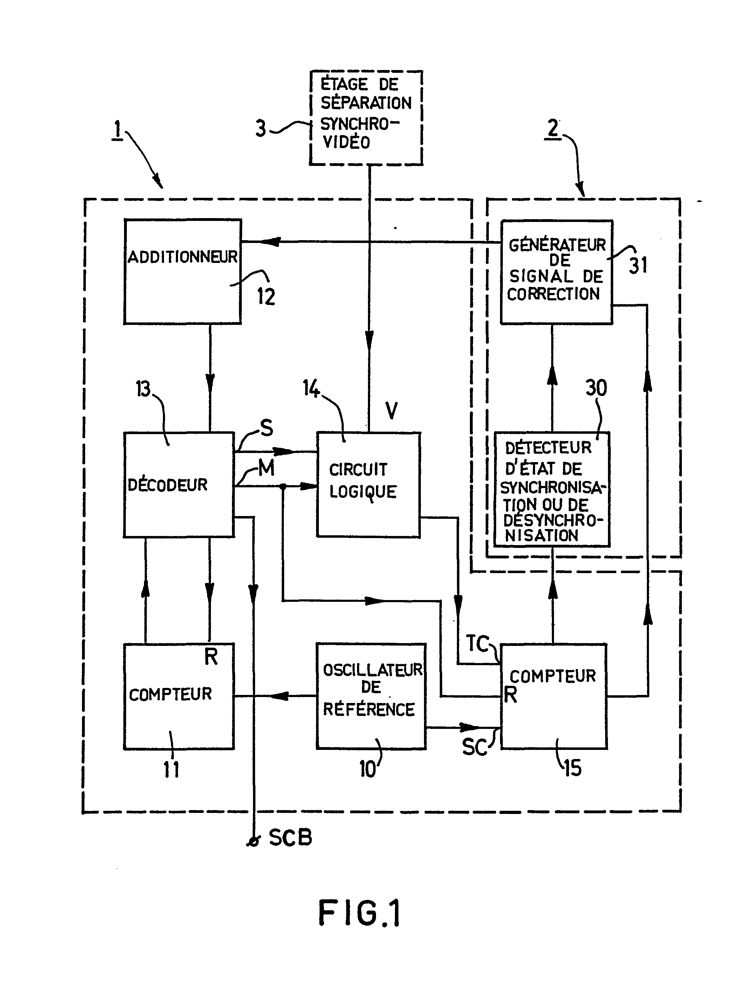

Le circuit selon l'invention (figure 1) comprend deux étages numériques fondamentaux, à savoir un étage de comparaison de phase 1 et un étage de commande de synchronisation 2.

L'étage de comparaison de phase 1 comprend lui-même : (a) un oscillateur de référence 10 qui délivre des impulsions périodiques de fréquence supérieure à la fréquence ligne du récepteur de télévision (dans l'exemple ici décrit, la fréquence de l'oscillateur est 40 mégahertz et la période des impulsions 25 nanosecondes mais, en fait, ces valeurs sont choisies selon le pas de quantification que l'on souhaite et qui est d'autant plus fin que la fréquence de l'oscillateur est plus élevée) ; (b) un diviseur de fréquence comprenant un compteur 11, un additionneur 12 et un décodeur 13 et qui délivre les signaux de commande de balayage des lignes ; (c) un comparateur de phase, décrit ci-après de façon plus détaillée, qui reçoit sur une première entrée les signaux de sortie du diviseur de fréquence et sur une deuxième entrée les signaux de synchronisation lignes issus d'un étage 3 de séparation des signaux vidéo et de synchronisation (qui équipe le récepteur) et qui délivre à partir de l'écart de phase constaté entre ces signaux reçus un signal numérique dont la valeur et le signe sont liés directement à ceux de l'écart, comme on le précisera plus loin.

Le compteur 11 du diviseur de fréquence est branché en sortie de l'oscillateur de référence 10 et comporte 12 bits de sortie. De même, l'additionneur 12, dans lequel s'ajoutent une valeur fixe N de rapport de division de fréquence et une valeur algébrique de correction dN délivrée, comme on le verra ci-dessous, par l'étage de commande de synchronisation 2, comporte 12 bits de sortie. Le décodeur 13 reçoit d'une part le signal numérique (à 12 bits) de sortie du compteur 11, d'autre part le signal numérique N + dN (à 12 bits) de sortie de l'additionneur 12, et, à l'aide de 12 circuits OU-exclusif, reliant deux à deux les bits correspondants du compteur et de l'additionneur, et d'un circuit de décodage, délivre une impulsion de sortie S (de largeur 25 nanosecondes) si et seulement si tous les bits correspondants coïncident. En l'absence de cette coïncidence, aucun signal n'est présent en sortie du décodeur 13 ; lorsqu'au contraire la coïncidence entre les deux signaux numériques reçus est constatée par le décodeur, l'impulsion qui apparaît sur sa sortie assure la remise à zéro du compteur 11 et, simultanément, est envoyée vers la première entrée du comparateur de phase.

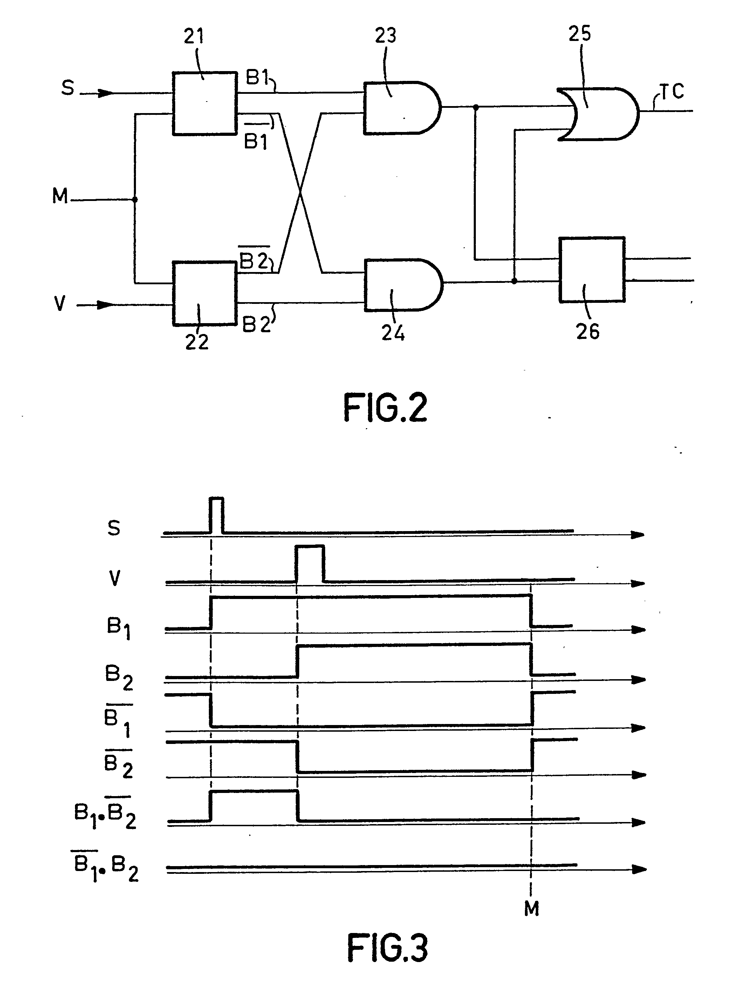

Ce comparateur de phase comprend un circuit logique 14 et un compteur 15 ; le circuit logique 14 reçoit sur sa première entrée l'impulsion S, de largeur 25 nanosecondes, délivrée par le décodeur 13 du diviseur de fréquence et, sur une deuxième entrée, l'impulsion V de synchronisation lignes provenant de l'étage de séparation 3, impulsion dont la largeur est voisine de 5 microsecondes. Comme le montre la figure 2, l'impulsion S est envoyée sur une première entrée d'une bascule 21 et l'impulsion V sur une première entrée d'une bascule 22 ; une impulsion M de milieu de ligne est produite environ 32 microsecondes après l'impulsion S et est envoyée sur les deuxièmes entrées de ces bascules. Si l'on appelle $B_1$ et $\bar{B}_1$ les deux signaux de sortie possibles de la bascule 21 et $B_2$ et $\bar{B}_2$ les deux signaux de sortie possibles de la bascule 22, les deux connexions de sortie de $B_1$ et de $\bar{B}_2$ sont reliées aux deux entrées d'une porte ET 23, tandis que les deux connexions de sortie de $B_2$ et de $\bar{B}_1$ sont reliées aux deux entrées d'une autre porte ET 24. La connexion de sortie de la porte ET 23 et celle de la porte ET 24 sont reliées respectivement aux deux entrées d'une porte OU 25, dont la connexion de sortie délivre une impulsion ayant pour durée l'écart de phase entre l'impulsion S et l'impulsion V.

En effet, compte tenu de la structure du circuit logique 14 qui vient d'être décrit (et qui est représenté sur la figure 2, tandis que la figure 3 montre les signaux que l'on peut observer en différents points de ce circuit logique), le signal de sortie de la porte OU 25 est donné par l'expression :

$$TC = B_1 \cdot \bar{B}_2 + \bar{B}_1 \cdot B_2$$

Lorsque par exemple l'impulsion V arrive postérieurement à l'impulsion S, l'écart de phase TC est donné par $B_1 \cdot \bar{B}_2$, puisque, comme le montre la figure 3, $\bar{B}1 \cdot B_2$ est nul. Inversement, si l'impulsion S arrive postérieurement à l'impulsion V, c'est $B_1 \cdot \bar{B}_2$ qui est nul et $\bar{B}_1 \cdot B_2$ qui fournit l'écart de phase entre les deux impulsions. Une troisième bascule 26, dont les deux entrées reçoivent respectivement les signaux de sortie des portes ET 23 et 24, fournit le signe de cet écart de phase, selon celle des deux connexions de sortie de cette bascule sur laquelle est présent un signal non nul.

Au circuit logique 14 est associé le compteur 15 ; ce compteur, ici à 6 bits, reçoit d'une part le signal TC exprimant l'écart de phase entre les impulsions S et V, d'autre part une séquence continue SC d'impulsions périodiques de fréquence 40 mégahertz générées par l'oscillateur de référence 10, et aussi, à chaque milieu de ligne, le signal M de remise à zéro, délivré par le décodeur 13. Dans ce décodeur 13 a lieu un décodage fixe environ toutes les 32 microsecondes après chaque remise à zéro du compteur 11 par l'impulsion S sortant du décodeur (c'est le temps de correction du circuit de filtrage numérique défini plus loin, plus court que celui correspondant à une demi-ligne, qui permet en fait de fixer l'instant à partir duquel peut être effectuée la remise à zéro du compteur 15). Le compteur 15 délivre un signal numérique de sortie à 6 bits représentant le nombre d'impulsions de période 25 nanosecondes qui se succèdent pendant le temps de comptage que constitue l'écart de phase TC délivré par le circuit logique 14. Comme la bascule 26 de ce circuit 14 fournit une information sur le signe de l'écart de phase (S postérieur à V, ou V postérieur à S), on dispose en fait d'un signal à 7 bits (6 bits + 1 bit de signe). Si le signal de sortie de la bascule 26 est un « 0 », la valeur absolue du signal du compteur 15 est transmise directement ; si c'est un « 1 », c'est le complément à deux de cette valeur absolue qui est destiné à être envoyé vers l'étage 2 de commande de synchronisation qui va être maintenant décrit en détail.

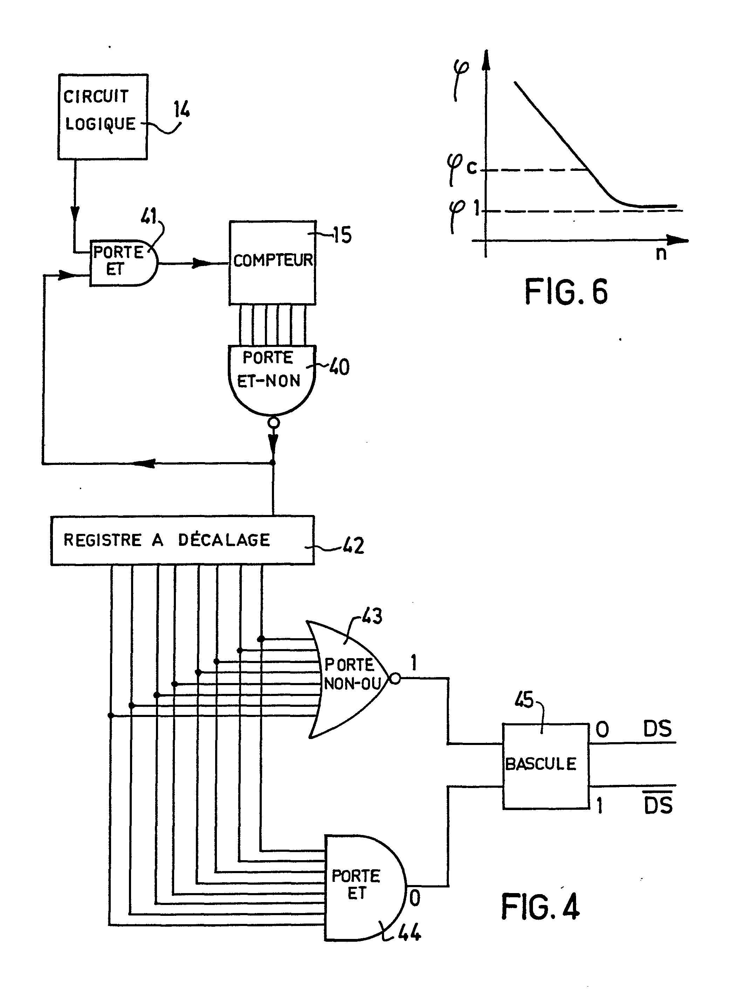

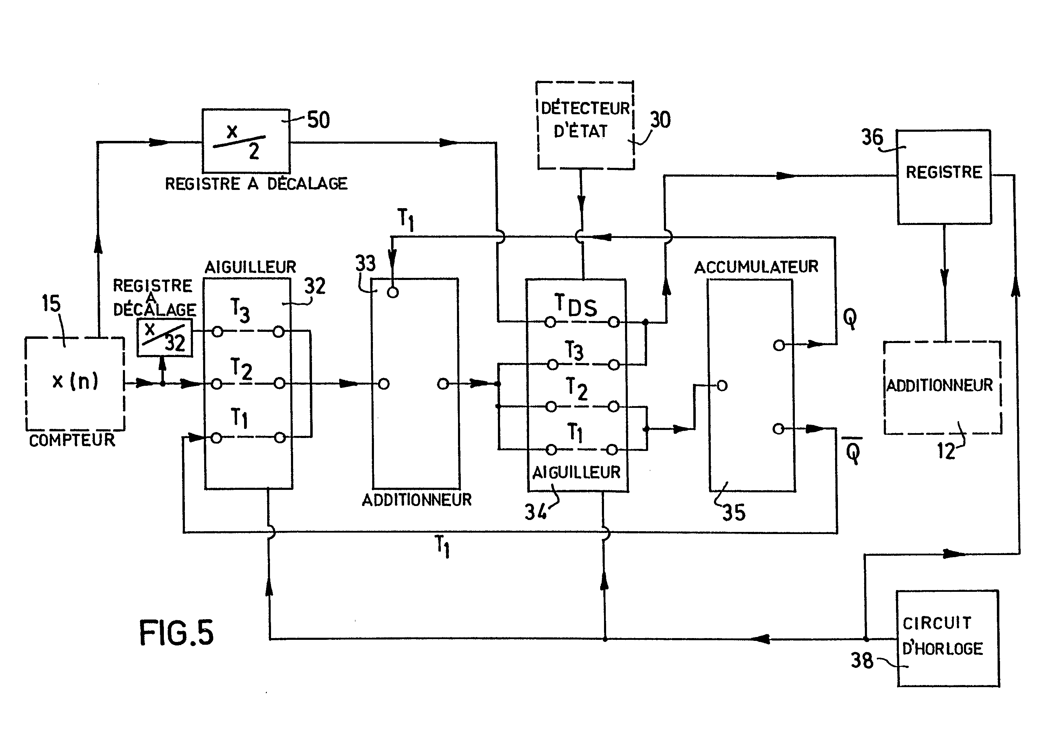

Cet étage 2, qui reçoit donc le signal numérique à 7 bits défini ci-dessus et délivré par l'étage de comparaison de phase 1, comprend d'une part un détecteur d'état 30 et d'autre part un générateur de signal de correction qui est ici un circuit de filtrage numérique 31 (un exemple de réalisation du détecteur 30 et du circuit 31 est représenté sur les figures 4 et 5 respectivement). En effet, tant que l'écart de phase constaté à l'intérieur de l'étage 1 de comparaison de phase reste à l'intérieur d'une limite fixée à l'avance, on dit qu'il y a synchronisation ; si l'écart de phase dépasse cette valeur-limite, il y a désynchronisation. La limite entre synchronisation et désynchronisation est fixée, dans l'exemple de réalisation ici décrit, par la capacité maximale du compteur 15 de l'étage 1, et le détecteur d'état 30 a pour fonction, comme on le précise maintenant ci-dessous, de constater que cette limite n'est pas dépassée, ou bien est dépassée de façon durable ou non.

Ce détecteur d'état 30 comprend d'abord une porte ET-NON 40 (ou porte NAND) recevant sur ses entrées les 6 bits qui constituent la valeur du signal numérique de sortie du compteur 15. S'il y a désynchronisation, c'est-à-dire si la capacité maximale du compteur 15 est atteinte, ces 6 bits ont la valeur « 1 » et la porte NAND 40 délivre alors, et seulement dans ce cas, un « 0 ». Cette connexion de sortie de la porte NAND 40 est renvoyée vers une entrée d'une porte ET 41 dont l'autre entrée reçoit la connexion de sortie TC du circuit logique 14 et dont la sortie est renvoyée vers l'entrée du compteur 15 ; cette porte 41 permet le maintien, pour enregistrement, de cet état de saturation du compteur 15. La sortie de la porte NAND 40 est également envoyée vers un registre à décalage 42 à entrée série et à sorties parallèles qui réalise l'enregistrement de la situation constatée en sortie de la porte NAND 40 (et donc du compteur 15) pour huit lignes consécutives ; le choix de huit lignes n'est qu'un exemple, on peut adopter un nombre plus élevé si l'on veut avoir une meilleure immunité contre les parasites. Les 8 bits de sortie de ce registre 42 sont envoyés d'une part sur les huit entrées d'une porte NON-OU 43 (ou porte NOR) et d'autre part sur les huit entrées d'une porte ET 44, qui peut tout aussi bien être remplacée par une porte NAND et un inverseur, et les sorties de ces portes 43 et 44 constituent les deux entrées d'une bascule 45.

Si la capacité du compteur 15 est dépassée pour huit lignes consécutives, on détecte, après enregistrement, huit « 0 » en sortie du registre 42. A huit « 0 » en entrée de la porte NOR 43 correspond, et seulement dans ce cas, un « 1 » en sortie de cette porte. A huit « 0 » en entrée de la porte ET 44 correspond en sortie un « 0 ». Dans cette situation, la bascule 45 qui reçoit sur sa première entrée la sortie « 1 » de la porte NOR 43 et sur sa deuxième entrée la sortie « 0 » de la porte ET 44 délivre sur sa première sortie DS un « 0 » et sur sa deuxième sortie $\overline{DS}$ un « 1 » : on dit qu'on se trouve alors dans « l'état désynchronisé » du récepteur.

Si la capacité du compteur 15 n'est dépassée que pour quelques lignes, ou par intermittence sans que jamais cela ne se produite pour huit lignes consécutives au moins, à la sortie à 8 bits du registre 42 (composée d'un certain nombre de « 0 » et de « 1 », les « 0 » correspondant aux lignes pour lesquelles la capacité du compteur 15 est dépassée et les « 1 » à celles pour lesquelles elle ne l'est pas) correspond un « 0 » en sortie de la porte NOR 43. Les sorties de la bascule 45 deviennent alors DS = 1 et $\overline{DS}$ = 0 : on se trouve dans « l'état synchronisé » du récepteur. Dans cet état synchronisé, la bascule 45 ne change pas d'état pour des dépassements erratiques. Un changement d'état ne se produit que pour un changement d'état simultané des sorties de la porte NOR 43 et de la porte ET 44.

Selon que le détecteur d'état 30 a constaté l'existence de l'état synchronisé ou de l'état désynchronisé, deux fonctions différentes sont alors assurées par le circuit de filtrage numérique 31. Dans l'état de synchronisation, ce circuit de filtrage 31 constitue l'équivalent du filtre passe-bas utilisé de façon habituelle dans les réalisations analogiques antérieures à l'invention et qui, prévu pour être sensible seulement aux variations lentes afin de jouer l'effet d'un volant, est un circuit intégrateur. Si x(n) est le signal numérique à 6 bits présent en sortie du compteur 15 pour la ligne de rang n, et y(n) le signal de sortie du circuit de filtrage 31 pour la même ligne de rang n (lorsque l'état constaté est celui de la synchronisation), y(n) est fourni par l'expression suivante :

$$y(n) = a \cdot x(n) + b \cdot y(n-1)$$

dans laquelle a et b sont des coefficients déterminés par le calcul pour que le filtre soit bien le filtre passe-bas souhaité (le choix de a et b est déterminé par le gabarit du filtre souhaité et sa pente). On a retenu dans le cas présent les valeurs suivantes :

a = 1/2 048 et b = 2 047/2 048 (choisies en tenant compte de la puissance de 2 la plus proche des valeurs appropriées, pour la simplicité des calculs).

Il vient donc :

$$y(n) = x(n)/2\,048 + 2\,047\,y(n-1)/2\,048$$

ou bien :

$$2\,048\,y(n) = x(n) + 2\,047\,y(n-1)$$

Comme x(n) et y(n) sont des signaux numériques, et que 2 048 est une puissance de 2, pour obtenir y(n) à partir de 2 048 y(n), il suffira d'effectuer 11 décalages vers la droite (2 048 = $2^{11}$) de la valeur numérique de 2 048 y(n). Pour cette détermination de y(n), le calcul est effectué en trois phases :

a) pour obtenir 2 047 y(n − 1), il faudrait soustraire y(n − 1) de 2 048 y(n − 1) qui a été déterminé lors du cycle précédent de calcul. On préfère ajouter à 2 048 $y(n-1)$ son complément à deux, ce qui fournit le même résultat.

b) on ajoute $x(n)$ à 2 047 $y(n-1)$.

c) par dix décalages de 2 048 $y(n)$ vers la droite, on obtient la valeur numérique de 2 $y(n)$ (en effet, au lieu d'effectuer 11 décalages vers la droite comme on vient de le dire ci-dessus, on préfère, en réalité, n'en effectuer que 10 : on obtient ainsi 2 $y(n)$ au lieu de $y(n)$, ce qui est équivalent à une augmentation du gain statique et permet d'effectuer une correction de phase plus énergique, avec une restitution plus fidèle). En même temps, on ajoute à cette valeur 2 $y(n)$ calculée une fraction de $x(n)$ (la fraction $x(n)/32$ dans le cas présent) destinée à simuler une résistance venant en série avec le condensateur du filtre analogique passe-bas auquel est équivalent le circuit de filtrage numérique réalisé par mise en œuvre des phases (a) et (b). Ce condensateur du filtre analogique est ici simulé par l'inertie non négligeable (et voulue, comme on l'a vu plus haut) du circuit de filtrage 31, ce dont on peut se rendre compte en observant que $y(n)$ et $y(n-1)$ diffèrent peu l'un de l'autre. Comme ce condensateur court-circuite tout signal au-dessus d'une certaine fréquence, aucune correction ne serait plus possible puisqu'on ne disposerait plus d'aucun signal d'erreur. L'addition d'une fraction de $x(n)$ à la valeur de $y(n)$ revient donc, dans le filtre analogique équivalent, à l'établissement d'un diviseur potentiométrique superposé au circuit de filtrage et permettant l'envoi d'une petite tension résiduelle suffisante pour effectuer la correction ; en même temps, on stabilise ainsi le circuit de filtrage en l'amortissant, par adoucissement du rebond causé par la présence du filtre qui se manifeste en l'absence de cette résistance simulée. Le signal global obtenu après accomplissement des phases (a), (b) et (c) est alors envoyé vers l'additionneur 12 (voir la figure 1) : c'est le signal appelé dN précédemment.

Au contraire, dans l'état de désynchronisation du récepteur, une division de l'écart $x(n)$ par deux est effectuée préalablement à toute action de filtrage, afin de ramener cet écart $x(n)$ à une valeur compatible avec la capacité du compteur 15. Cette division par deux est réalisée à l'aide d'un registre à décalage 50 délivrant un signal $y(n) = x(n)/2$ qui est envoyé, comme précédemment, vers l'additionneur 12. Si $y(n)$ n'est pas compatible avec la capacité du compteur 15, on renouvelle la division par deux autant de fois que nécessaire pour que la valeur numérique $y(n)$ obtenue redevienne inférieure à cette capacité du compteur. Lorsque ce résultat est obtenu et qu'en outre la valeur de $y(n)$ reste au moins pendant le balayage de huit lignes consécutives dans la limite de la capacité du compteur 15, on considère que le retour à l'état de synchronisation est réalisé ; il y a alors commutation du circuit de filtrage en position synchronisée, avec préréglage de ce circuit au moment de la commutation à une valeur sensiblement égale à celle prise par le signal dN après huit lignes consécutives dans l'état de synchronisation (pour se libérer des phénomènes transitoires dus aux rebonds constatés avec les filtres analogiques). Le circuit de filtrage 31, dont la structure et le fonctionnement vont être décrits maintenant de façon plus détaillée, peut maintenant, à nouveau, exercer la fonction de filtre passe-bas qui vient d'être précisée plus haut.

Le mode de réalisation ici adopté pour le circuit de filtrage 31 (figure 5) comprend un aiguilleur 32, un additionneur 33, un aiguilleur 34, un accumulateur 35, un registre 36, un circuit d'horloge 38, et le registre à décalage 50. On a également représenté, en traits interrompus, l'additionneur 12, le compteur 15 et le détecteur d'état 30 déjà décrits. Selon que le récepteur est dans l'état de synchronisation ou au contraire de désynchronisation, le détecteur d'état 30 autorise exclusivement l'exécution des trois phases (a), (b), (c) pendant trois intervalles de temps, $T_1$, $T_2$, $T_3$ ou au contraire exclusivement l'exécution des divisions par deux successives (pour le retour de $y(n)$ dans la limite de la capacité du compteur 15) pendant l'intervalle de temps $T_{DS}$ (les liaisons représentées sur la figure 5 et accompagnées de $T_1$, $T_2$, $T_3$ ou $T_{DS}$ sont établies exclusivement pendant lesdits intervalles de temps, toutes les autres liaisons existant en permanence).

Dans l'état de synchronisation, la succession des phases (a), (b), (c), est commandée de la façon suivante :

a) 2 048 $y(n-1)$, qui est la valeur numérique Q présente en sortie de l'accumulateur 35 à la fin du précédent cycle d'exécution des phases (a), (b), (c), est envoyé vers l'additionneur 33, tandis que le complément à deux de 2 048 $y(n-1)$ (soit $\bar{Q}'$), valeur également prélevée en sortie de l'accumulateur 35, est simultanément envoyé vers une entrée de l'aiguilleur 32 qui, sur commande du circuit d'horloge 38, l'envoie aussitôt vers l'additionneur 33. Ces opérations sont exécutées pendant l'intervalle de temps $T_1$, à la fin duquel la valeur 2 047 $y(n-1)$ apparue en sortie de l'additionneur 33 et passant dans l'aiguilleur 34 est stockée dans l'accumulateur 35.

b) $x(n)$, valeur numérique délivrée par le compteur 15, est envoyé vers l'aiguilleur 32 qui, sur commande du circuit d'horloge 38, l'envoie aussitôt vers l'additionneur 33. Ces opérations sont exécutées pendant $T_2$, à la fin duquel la valeur 2 048 $y(n) = x(n) + 2 047 y(n-1)$ apparue en sortie de l'additionneur 33 est stockée dans l'accumulateur 35, après passage par l'aiguilleur 34.

c) 2 048 $y(n)$, valeur numérique présente à la fin de l'intervalle $T_2$ en sortie de l'accumulateur 35, est envoyée vers le registre 36 où, après dix décalages vers la droite, on obtient la valeur numérique 2 $y(n)$ à laquelle est ajoutée la fraction $x(n)/32$ au moyen de l'additionneur 33. La valeur ainsi obtenue passe par l'aiguilleur 34, sur commande du circuit d'horloge 38, pendant l'intervalle de temps $T_3$, ce qui fournit le signal de sortie global envoyé vers l'additionneur 12 pour constituer le signal dN.

Dans l'état de désynchronisation, les liaisons $T_1$, $T_2$, $T_3$ ne sont plus établies dans l'aiguilleur 34, mais seulement la liaison $T_{DS}$ à partir de la sortie DS de la bascule 45 du détecteur d'état 30, pour effectuer à partir de x(n) les divisions par deux (dans le registre à décalage 50) qui vont permettre de ramener la sortie du circuit 31 dans la limite de la capacité du compteur 15 et de resynchroniser le récepteur.

L'étage 2 de commande de synchronisation, constitué par l'association du détecteur d'état 30 et du circuit de filtrage numérique 31 (incluant le registre à décalage 50 qui peut cependant ne jamais servir si l'état de désynchronisation n'est jamais constaté), est donc prévu pour garantir des plages de capture constantes et parfaitement déterminées (par la capacité du compteur 15). Si une correction de fréquence doit être effectuée en plus de la correction de phase consécutive à la constatation de l'existence d'un écart de phase, la courbe $\phi = f$ (nombre n de lignes), qui exprime pour chaque ligne la valeur de l'écart de phase au fur et à mesure que la recherche de synchronisation progresse, tend asymptotiquement non plus vers l'axe horizontal des abscisses, $\phi = 0$, mais vers une asymptote $\phi =$ l'écart de période constaté, parallèle à l'axe des abscisses. La lecture de cette même courbe montre que cet écart de période ne peut jamais être réduit s'il est supérieur à la capacité $\phi_c$ du compteur 15 ; s'il est inférieur, il pourra toujours l'être.

Le signal de sortie dN du circuit de filtrage 31 est reçu par l'additionneur 12, qui reçoit également un signal N affiché en binaire sur des entrées appropriées et égal au rapport de la fréquence de l'oscillateur de référence 10 et de la fréquence lignes du récepteur (dans le cas présent, N est égal à 40 mégahertz/15 625 mégahertz, soit 2 560). Si dN = 0, cela signifie que les signaux de commande de balayage des lignes, obtenus après la division de fréquence effectuée sur les impulsions périodiques de sortie de l'oscillateur 10, et les signaux de synchronisation lignes, issus de l'étage 3 de séparation des signaux vidéo et de synchronisation qui équipe le récepteur, sont exactement en phase ; si dN est positif ou négatif, cela signifie au contraire que ces signaux ne sont pas en phase et qu'une correction de la valeur de N doit être effectuée pour compenser les dérives entraînant cet écart de phase. En sortie du décodeur 13, le signal finalement obtenu est constitué d'impulsions de période variable et égale à T × (N ± dN), T étant la période de l'horloge constituée par l'oscillateur de référence 10, et ces impulsions constituent les signaux utiles de commande de balayage des lignes délivrés par le circuit selon l'invention et disponibles sur la connexion de sortie SCB (voir figure 1) du décodeur 13. Le rapport cyclique de ces signaux dépend de l'étage de commande de balayage auquel ils sont fournis (et qui ne fait pas partie de l'invention) : si l'élément commandé dans cet étage est un transistor, le rapport cyclique peut être voisin de 50 % pour que ces signaux aient une durée suffisante, alors qu'il pourrait être nettement plus faible dans le cas où l'élément commandé serait un thyristor.

On peut cependant remarquer que, dans ce circuit de correction selon l'invention, la valeur à quantifier de façon numérique n'est pas nécessairement un multiple exact du pas de quantification défini par la fréquence de l'oscillateur 10. Cette valeur est alors exprimée de façon approchée, soit par défaut, soit par excès, et il se produit une variation incessante du nombre de pas de quantification entre ces deux valeurs approchées (immédiatement inférieure et supérieure à la valeur réelle à quantifier), conduisant à une instabilité dans le déclenchement du balayage des lignes et donc à une perte de l'alignement par rapport au signal vidéo, visible surtout sur des lignes verticales.

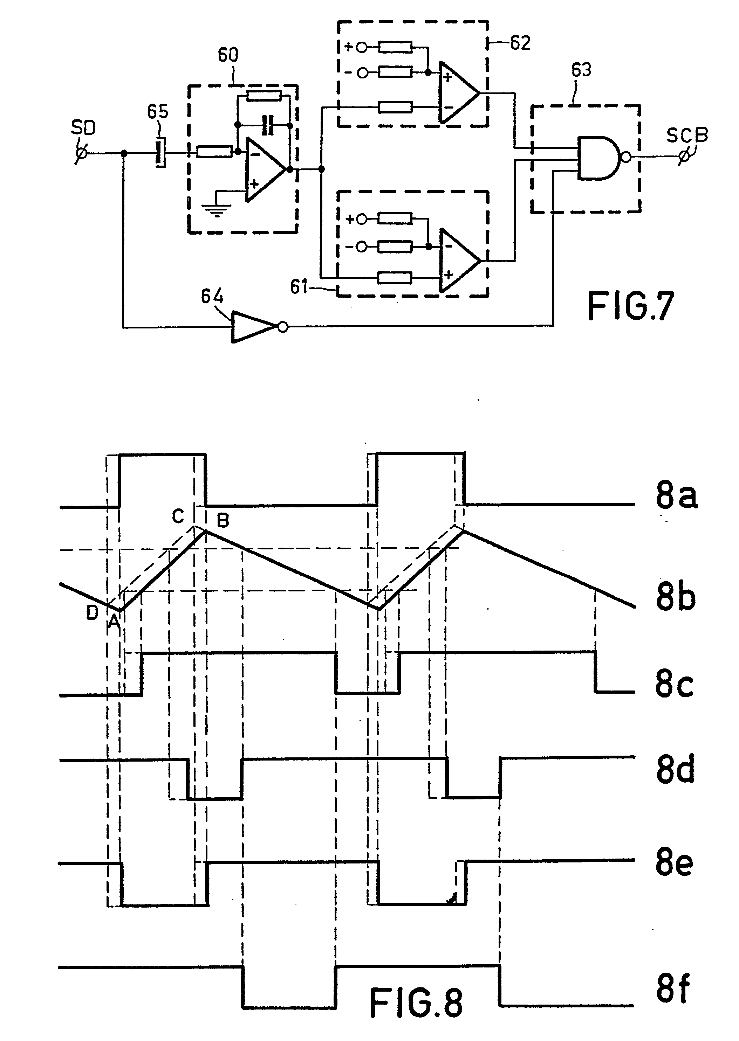

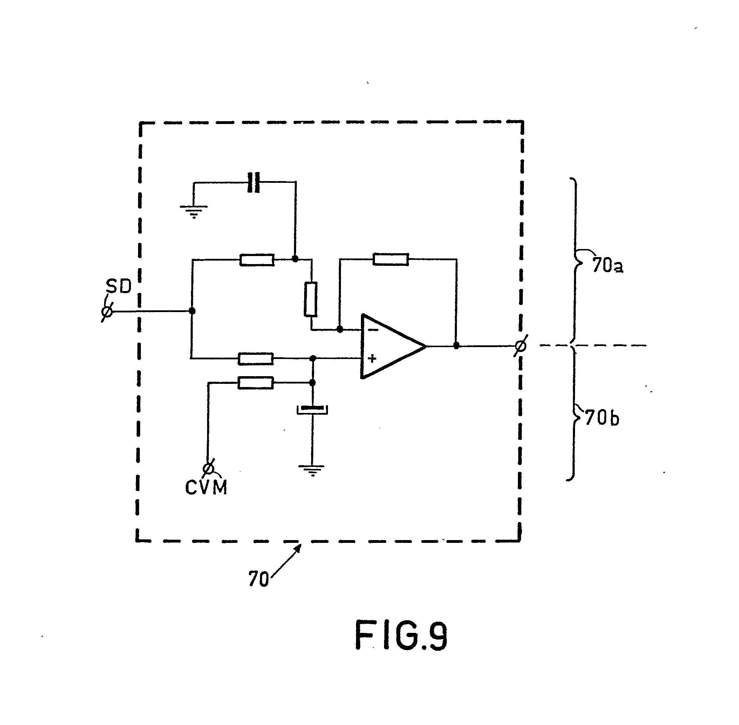

Cette instabilité peut être totalement supprimée à l'aide de l'étage de stabilisation décrit en référence aux figures 7 et 8 et qui est mis en place entre la sortie du décodeur 13 et la connexion SCB. A partir des signaux utiles de commande de balayage, on génère de façon connue en sortie SD du décodeur 13 un créneau représentant un certain nombre de coups d'horloge (les impulsions de sortie de l'oscillateur 10) et donc de largeur constante (voir la figure 8a), mais dont les flancs sont affectés de l'instabilité due à l'encadrement aléatoire par défaut ou par excès de la valeur réelle à quantifier ; il s'ensuit que, contrairement à la largeur du créneau, la partie restante de la période n'est, elle, pas fixe mais animée de cette même instabilité (ou « jitter », en anglais). Ces signaux en créneaux sont envoyés du décodeur 13 vers un intégrateur 60, qui délivre le signal représenté sur la figure 8b : en raison de la linéarité des dents de scie de ce signal, les flancs montants sont tous parallèles entre eux (de même que les flancs descendants), et, en outre, animés de la même instabilité déjà mentionnée. Par ailleurs, comme les créneaux correspondant à ces flancs montants sont de largeur constante, les quadrilatères ABCD sont des parallélogrammes, et les segments BC et DA sont égaux et alignés avec les flancs descendants correspondants. Donc, quelle que soit l'instabilité affectant les signaux utiles de commande de balayage des lignes, on peut constater sur la figure 8b qu'il y a superposition de la plus grande partie de tous les flancs descendants du signal de sortie de l'intégrateur 60, l'instabilité n'affectant que les flancs de montée de ce signal et les extrémités des flancs descendants.

Il suffit alors d'utiliser des seuils de basculement sur ces flancs descendants superposés et en apparence immobiles, pour produire des signaux en créneaux rigoureusement stables. Cette opération est réalisée à l'aide de deux comparateurs 61 et 62 placés en parallèle et recevant chacun le signal de sortie, en dents de scie, de l'intégrateur 60 ; le comparateur 61, par exemple, reçoit ce signal sur son entrée non inverseuse, tandis que le comparateur 62 le reçoit sur son entrée inverseuse. Les signaux de sortie des comparateurs 61 et 62 (représentés respectivement sur les figures 8c et 8d) sont envoyés vers deux entrées d'une porte ET-NON (ou porte NAND) 63, une troisième entrée de cette porte NAND 63 recevant (voir la figure 8e) le signal de sortie du décodeur 13 après traversée d'un inverseur 64. Les signaux de sortie de la porte NAND 63 (voir la figure 8f) constituent les signaux utiles, cette fois rigoureusement stables, de commande de balayage des lignes, disponibles sur la connexion SCB des figures 1 et 7. Comme le met en évidence la figure 8f par rapport à la figure 8b, il suffit de déplacer les seuils de basculement sur les flancs descendants (figure 8b) au moyen des tensions sur l'autre entrée des comparateurs 61 et 62, pour faire varier la largeur (figure 8f) des signaux utiles de commande de balayage des lignes et donc leur rapport cyclique.

Dans le montage de la figure 7, un condensateur 65 permet de donner au signal de sortie en dents de scie de l'intégrateur 60 une valeur moyenne nulle. Dans une variante de réalisation, il peut être intéressant, au contraire, de pouvoir régler de façon continue cette valeur moyenne. Cette possibilité fournit en effet l'avantage suivant : si les seuils de basculement restent fixes et si la valeur moyenne du signal en dents de scie varie, il se produit un déplacement de la position en phase des signaux de commande de balayage disponibles sur la connexion SCB.

La figure 9 montre un exemple de réalisation d'un circuit permettant un tel réglage de position en phase (cette variante venant alors remplacer l'ensemble formé, sur la figure 7, par l'intégrateur 60 et le condensateur 65). Ce circuit est un double intégrateur 70 du signal de sortie du décodeur 13, dont la partie supérieure 70a assure comme précédemment la génération du signal en dents de scie (faible intégration) et dont la partie inférieure 70b assure la génération d'un signal continu (forte intégration) venant se superposer au signal en dents de scie en sortie de cet intégrateur 70. Le déplacement de niveau du signal continu est commandé par un signal délivré sur la connexion CVM et de durée égale, par exemple, à l'écart $\Delta\varphi$ entre l'impulsion de retour de ligne en provenance de l'étage final de lignes (non représenté) et un repère en phase fixe par rapport à l'oscillateur (impulsion de remise à zéro par exemple). La position en phase des signaux utiles de commande de balayage délivrés sur la connexion SCB varie donc en fonction de la valeur de cet écart. On notera par ailleurs que la variante représentée sur la figure 9 possède moins de sorties que la partie équivalente (intégrateur 60 + condensateur 65) de l'étage représenté sur la figure 7, ce qui est très favorable à une réalisation en circuit intégré.

Bien entendu, la présente invention n'est pas limitée aux exemples décrits et représentés, à partir desquels on pourra prévoir d'autres modes et d'autres formes de réalisation sans pour cela sortir du cadre de l'invention.

Il est par exemple possible de donner au signal en dents de scie de la figure 8b une forme telle que le flanc montant AB soit nettement plus long et le flanc descendant nettement plus bref. Les flancs descendants devenant plus raides, tout défaut de linéarité au niveau des seuils de basculement se traduit sur le signal de la figure 8f par une variation parasite de phase plus faible.

On peut aussi utiliser un seul seuil de basculement (et donc un seul comparateur 61 ou 62) au lieu de deux dans le cas de la figure 8b, ce seuil unique correspondant au flanc de montée du signal de la figure 8f si c'est ce flanc de montée qui agit sur l'élément commandé (transistor ou thyristor) de l'étage de commande de balayage, ou correspondant au contraire au flanc de descente dans le cas contraire. Dans les deux cas, la position du flanc qui ne correspond pas au seuil unique peut être déterminée par comptage (et en tenant compte des considérations faites plus haut au sujet du rapport cyclique). L'utilisation d'un seul seuil offre ici l'avantage d'une plus grande latitude de mise en place sur le flanc descendant, entre l'extrémité B d'une dent de scie et le fond D de la dent de scie suivante.

## Revendications

1. Circuit de correction des écarts de phase entre les signaux de commande de balayage et les signaux de synchronisation dans un récepteur de télévision, comprenant un oscillateur de référence (10), un diviseur de fréquence (11, 12, 13) en sortie de l'oscillateur, un comparateur de phase (14, 15) destiné à fournir un signal exprimant la valeur et le signe de l'écart de phase entre les signaux de synchronisation et les signaux de sortie du diviseur de fréquence, un détecteur (30) de l'état de synchronisation ou de désynchronisation du récepteur, et un générateur de signal de correction (31) pour corriger le diviseur de fréquence à l'état de désynchronisation, ledit circuit étant caractérisé en ce qu'il est prévu pour la synchronisation des lignes et en ce que, à cet effet, le diviseur de fréquence comprend un décodeur (13) destiné à délivrer un signal si le générateur de signal de correction (31) ne fournit pas de correction, la séquence des signaux de sortie du décodeur ainsi obtenus constituant les signaux de commande de balayage de lignes, et en ce que le détecteur d'état (30) est un dispositif à seuil destiné à constater l'état de synchronisation lorsque l'écart de phase entre les signaux de synchronisation de lignes et les signaux de sortie du diviseur de fréquence est inférieur à une valeur fixée d'avance ou l'état de désynchronisation lorsque ledit écart est au moins égal à cette valeur.

2. Circuit selon la revendication 1, caractérisé en ce que le dispositif à seuil comprend un dispositif d'enregistrement (42) des signaux successifs de sortie du comparateur de phase (14, 15) et un dispositif de commutation du générateur de signal de correction (31) en position de maintien ou au contraire de recherche de synchronisation selon le contenu de cet enregistrement et en ce que ce générateur de signal de correction (31) comprend, en position de maintien de synchronisation, un filtre passe-bas d'élimination des parasites et, en position de recherche de synchronisation, un diviseur numérique (50) destiné à ramener l'écart de phase, par divisions successives de cet écart, à une valeur inférieure au seuil du détecteur d'état (30).

3. Circuit selon la revendication 2, caractérisé en ce que le diviseur de fréquence comprend un premier compteur (11) branché en sortie de l'oscillateur de référence (10), un additionneur (12) dans lequel s'ajoutent une valeur fixe N de rapport de division et une valeur algébrique dN de correction générée dans l'étage numérique de commande de synchronisation (2), et le décodeur (13) recevant d'une part le signal numérique de sortie du compteur (11) et d'autre part le signal numérique N + dN de sortie de l'additionneur (12) et destiné à délivrer un signal seulement si ces signaux numériques sont égaux.

4. Circuit selon l'une des revendications 1 à 3, caractérisé en ce qu'il comprend un étage de stabilisation du signal utile de sortie du décodeur (13), composé successivement d'un intégrateur du signal de sortie du décodeur (13), de deux comparateurs (61) et (62) placés en parallèle et recevant chacun le signal de sortie en dents de scie de l'intégrateur et d'une porte ET-NON (63) ou porte NAND recevant sur deux de ses entrées les signaux de sortie des comparateurs (61) et (62) respectivement et sur une troisième entrée le signal de sortie d'un inverseur (64) du signal de sortie du décodeur (13).

5. Circuit selon la revendication 4, caractérisé en ce que l'intégrateur comprend une voie à faible intégration (70a) pour générer le signal en dents de scie et une voie réglable à forte intégration (70b) pour ajuster la valeur moyenne de ce signal en dents de scie.

**Claims**

1. A circuit for correcting phase deviations between the deflection drive signals and the synchronizing signals in a television receiver, comprising a reference oscillator (10), a frequency divider (11, 12, 13) provided at the output of the oscillator, a phase comparator (14, 15) for supplying a signal expressing the value and the sign of the phase deviation between the synchronizing signals and the frequency divider output signals, a synchronized or non-synchronized state detector (30) and a correction signal generator (31) for correcting the frequency divider in the non-synchronized state, said circuit being characterized in that it is designed for line synchronization and that to that effect the frequency divider comprises a decoder (13) for producing a signal when the correction signal generator (31) does not provide a correction, the sequence of the decoder output signals thus obtained constituting the line deflection drive signals, and that the state detector (30) is a threshold device for detecting either the synchronized state when the phase deviation between the line synchronizing signals and the frequency divider output signals is smaller than a predetermined value or the non-synchronized state when said deviation is at least equal to this value.

2. A circuit as claimed in claim 1, characterized in that the threshold device comprises a device (42) for recording consecutive signals from the output of the phase comparator (14, 15) and a change-over device for setting the correction signal generator (31) into the state of maintaining synchronization or, on the contrary, into the state of searching synchronization depending on the content of said recording and that said correction signal generator (31) comprises, in the state of maintaining synchronization, a low-pass filter for eliminating disturbances and in the state of searching synchronization, a digital divider (50) for adjusting the phase deviation, by consecutively dividing this deviation, to a value lower than the threshold of the state detector (30).

3. A circuit as claimed in claim 2, characterized in that the frequency divider comprises a first counter (11) which is connected to the output of the reference oscillator (10), an adder (12) in which a fixed value N of the division ratio and an algebraic correction value dN produced in the digital synchronization control stage (2) are added together, and the decoder (13) receiving the digital output signal from the counter (11) and also the digital output signal N + dN from the output of the adder (12) for supplying a signal only when these digital signals are equal.

4. A circuit as claimed in any of the claims 1 to 3, characterized in that it comprises a stabilizing stage for the useful output signal from the decoder (13), formed, in succession, by an integrator for the output signal from the decoder (13), two comparators (61) and (62) arranged in parallel and each receiving the sawtooth-shaped output signal from the integrator and a NAND-gate (63) receiving at two of its inputs the output signals of the comparators (61) and (62), respectively and at a third input the output signal from an inverter (64) for the output signal from the decoder (13).

5. A circuit as claimed in claim 4, characterized in that the integrator comprises a weak integration path (70a) for producing the sawtooth signal and a controllable strong integration path (70b) for adjusting the average value of this sawtooth signal.

**Patentansprüche**

1. Schaltungsanordnung zum Korrigieren von Phasenabweichungen zwischen den Ablenksteuersignalen und Synchronsignalen in einem Fernsehempfänger mit einem Bezugsoszillator (10), einem Frequenzteiler (11, 12, 13) an dem Ausgang des Oszillators, einer Phasenvergleichsschaltung (14, 15) zum Liefern eines Signals, das den Wert und das Vorzeichen der Phasenabweichung zwischen den Synchronsignalen und den Ausgangssignalen des Frequenzteilers angibt, einem Detektor (30) des Synchron- oder Ausser-Synchron-Zustandes des Empfängers und mit einem Korrektursignalgenerator (31) zum Korrigieren des Frequenzteilers im Falle des Ausser-Synchronzustandes, welche Schaltungsanordnung dadurch gekennzeichnet ist, dass sie zur Horizontal-Synchronisierung vorgesehen ist, und dass dazu der Frequenzteiler einen Decoder (13) enthält zum Liefern eines Signals, wenn der Korrektursignalgenerator (31) keine Korrektur bewirkt, wobei die Folge der erhaltenen Ausgangssignale des Decoders die Horizontal-Ablenksteuersignale bilden und dass der Zustandsdetektor (30) eine Schwelleneinrichtung ist zum Ermitteln des Synchronzustandes, wenn die Phasenabweichung zwischen den Horizontal-Synchronsignalen und den Ausgangssignalen des Frequenzteilers niedriger ist als ein vorbestimmter Wert oder zum Ermitteln des Ausser-Synchronzustandes, wenn die genannte Abweichung wenigstens dem genannten Wert entspricht.

2. Schaltungsanordnung nach Anspruch 1, dadurch gekennzeichnet, dass die Schwelleneinrichtung eine Aufzeichnungsanordnung (42) für die aufeinanderfolgenden Ausgangssignale der Phasenvergleichsschaltung (14, 15) sowie eine Einrichtung zum Umschalten des Korrektursignalgenerators (31) in die Stellung zum Festhalten oder im Gegensatz dazu zum Suchen der Synchronisierung entsprechend dem Inhalt dieser Aufzeichnung und dass der Korrektursignalgenerator (31) in der Synchronhaltestellung ein Tiefpassfilter zum Ausgleichen von Störungen und in der Synchronsuchstellung einen digitalen Teiler (50) enthält zum Verringern der Phasenabweichung durch aufeinanderfolgende Teilungen dieser Abweichung bis zu einem Wert unter der Schwelle des Zustandsdetektors (30).

3. Schaltungsanordnung nach Anspruch 2, dadurch gekennzeichnet, dass der Frequenzteiler einen ersten Zähler (11) enthält, der mit dem Ausgang des Bezugsoszillators (10) verbunden ist, weiterhin einen Addierer (12), in dem ein Festwert N des Teilungsverhältnisses und ein in der digitalen Synchronsteuerstufe (2) erzeugter algebraischer Korrekturwert dN addiert werden und wobei der Decoder (13) einerseits das digitale Ausgangssignal des Zählers (11) und andererseits das digitale Ausgangssignal N + dN des Addierers (12) erhält, und wobei der Decoder nur ein Signal liefert, wenn diese digitalen Signale gleich sind.

4. Schaltungsanordnung nach einem der Ansprüche 1-3, dadurch gekennzeichnet, dass sie eine Stabilisierungsstufe des nützlichen Ausgangssignals des Decoders (13) enthält, die aus einem Integrator des Ausgangssignals des Decoders (13), zwei parallel geschalteten Vergleichsschaltungen (61) und (62), die je das sägezahnförmige Ausgangssignal des Integrators erhalten und einem NAND-Tores (63) besteht, das an den zwei Eingängen die Ausgangssignale der Vergleichsschaltungen (61) bzw. (62) und an einem dritten Eingang das Ausgangssignal eines Inverters (64) des Ausgangssignals des Decoders (13) erhält.

5. Schaltungsanordnung nach Anspruch 4, dadurch gekennzeichnet, dass der Integrator eine Strecke für geringfügige Integration (70a) zum Erzeugen des sägezahnförmigen Signals sowie eine regelbare Strecke für starke Integration (70b) aufweist, zum Einstellen des Mittelwertes dieses sägezahnförmigen Signals.

FIG.1

FIG.2

FIG.3

2

FIG. 6

FIG. 4

3

FIG.5

FIG.7

FIG.8

8a

8b

8c

8d

8e

8f

FIG.9